# EUROPEAN PATENT APPLICATION

(11) **EP 4 436 079 A1**
(43) Date of publication of application: **25.09.2024**
(21) Application number: 23737484.8
(22) Date of filing: 10.01.2023
(51) Int. Cl.: H04L 1/18, H04W 76/28

(54) **CONTROL OF DRX TIMER FOR ONE-SHOT HARQ FEEDBACK**

(30) Priority: 10.01.2022 KR 20220003485
(71) Applicant: Samsung Electronics Co., Ltd., Suwon-si, Gyeonggi-do 16677 (KR)
(72) Inventor: BAEK, Sangkyu, Suwon-si, Gyeonggi-do 16677 (KR); JANG, Jaehyuk, Suwon-si, Gyeonggi-do 16677 (KR); AGIWAL, Anil, Suwon-si, Gyeonggi-do 16677 (KR)
(74) Representative: Nederlandsch Octrooibureau
(86) International application number: PCT/KR2023/000438
(87) International publication number: WO 2023/132736

(57) **Abstract**

A method performed by user equipment in a wireless communication system, provided in the present disclosure, may comprise the steps of: identifying that DRX has been configured; receiving a physical downlink control channel (PDCCH) at an active time of the DRX, the PDCCH including information for requesting one-shot HARQ feedback; on the basis of a request for the one-shot HARQ feedback, performing HARQ feedback corresponding to an identifier (ID) of a first HARQ process; and starting a DRX HARQ round trip time (RTT) timer associated with the first HARQ process.

## Description

### [Technical Field]

This disclosure relates to a method and apparatus performed by a base station or terminal in a wireless communication system, more particularly, to a method and apparatus for controlling a discontinuous reception (DRX) timer for one-shot hybrid automatic repeat request (HARQ) feedback.

### [Background Art]

5th generation (5G) mobile communication technologies define broad frequency bands such that high transmission rates and new services are possible, and can be implemented not only in "Sub 6 gigahertz (GHz)" bands such as 3.5 GHz, but also in "Above 6 GHz" bands referred to as millimeter wave (mmWave) including 28 GHz and 39 GHz. In addition, it has been considered to implement 6th generation (6G) mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (for example, operating a plurality of subcarrier spacings, etc.) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, new radio (NR) user equipment (UE) power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step random access channel (RACH) for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large scale antennas, metamaterial-based lenses and antennas for improving coverage of terahertz band signals, high-dimensional space multiplexing technology using orbital angular momentum (OAM), and reconfigurable intelligent surface (RIS), but also full duplex technology for increasing frequency efficiency of 6G mobile communication technologies and improving system networks, AI-based communication technology for implementing system optimization by utilizing satellites and artificial intelligence (AI) from the design stage and internalizing end-to-end AI support functions, and next-generation distributed computing technology for implementing services at levels of complexity exceeding the limit of terminal operation capability by utilizing ultrahigh-performance communication and computing resources.

### [Disclosure]

### [Technical Problem]

The disclosure proposes a method and apparatus for controlling a DRX timer for one-shot HARQ feedback in a wireless communication system.

The technical objects to be achieved by the disclosure are not limited to the technical objects mentioned above, and other technical objects not mentioned may be clearly understood by those skilled in the art from the following descriptions.

### [Technical Solution]

A method performed by a terminal in a wireless communication system according to an embodiment of the disclosure may comprise identifying that discontinuous reception (DRX) has been configured, receiving a physical downlink control channel (PDCCH) at an active time of the DRX, the PDCCH including information for requesting one-shot hybrid automatic repeat request (HARQ) feedback, performing HARQ feedback corresponding to an identifier (ID) of a first HARQ process among all HARQ processes on the basis of a request for the one-shot HARQ feedback, and starting a DRX HARQ round trip time (RTT) timer associated with the first HARQ process.

A method performed by a base station in a wireless communication system according to an embodiment of the disclosure may comprise transmitting information for configuring discontinuous reception (DRX) to a terminal, transmitting a physical downlink control channel (PDCCH) to the terminal at an active time of the DRX, the PDCCH including information for requesting one-shot hybrid automatic repeat request (HARQ) feedback, and receiving, from the UE, HARQ feedback corresponding to an identifier (ID) of a first HARQ process among all HARQ processes on the basis of a request for the one-shot HARQ feedback, wherein a DRX HARQ round trip time (RTT) timer associated with the first HARQ process may start.

A terminal in a wireless communication system according to an embodiment of the disclosure may comprise a transceiver, and a controller functionally connected to the transceiver, wherein the controller may be configured to identify that discontinuous reception (DRX) has been configured, receive a physical downlink control channel (PDCCH) at an active time of the DRX, the PDCCH including information for requesting one-shot hybrid automatic repeat request (HARQ) feedback, perform HARQ feedback corresponding to an identifier (ID) of a first HARQ process among all HARQ processes on the basis of a request for the one-shot HARQ feedback, and start a DRX HARQ round trip time (RTT) timer associated with the first HARQ process.

A base station in a wireless communication system according to an embodiment of the disclosure may comprise a transceiver, and a controller functionally connected to the transceiver, wherein the controller may be configured to transmit information for configuring discontinuous reception (DRX) to a terminal, transmit a physical downlink control channel (PDCCH) to the terminal at an active time of the DRX, the PDCCH including information for requesting one-shot hybrid automatic repeat request (HARQ) feedback, and receive, from the UE, HARQ feedback corresponding to an identifier (ID) of a first HARQ process among all HARQ processes on the basis of a request for the one-shot HARQ feedback, wherein a DRX

HARQ round trip time (RTT) timer associated with the first HARQ process may start.

### [Advantageous Effects]

According to an embodiment of the disclosure, the HARQ RTT timer and DRX retransmission timer for one-shot HARQ feedback can be determined.

In addition, according to an embodiment of the disclosure, the DRX activation time may be defined by considering at least one of the HARQ RTT timer for one-shot HARQ feedback and the DRX retransmission timer.

The effects that can be obtained from the disclosure are not limited to the effects mentioned above, and other effects not mentioned will be clearly understood by those skilled in the art from the description below.

### [Description of Drawings]

FIG. 1 is a diagram illustrating an operation method of unlicensed band communication according to an embodiment of the disclosure.
FIG. 2 is a diagram illustrating a DRX timer operation process during one-shot feedback according to an embodiment of the disclosure.
FIG. 3 is a diagram illustrating a detailed process of DRX timer operation during one-shot feedback according to an embodiment of the disclosure.
FIG. 4 is a diagram illustrating a DRX timer operation process during one-shot feedback according to an embodiment of the disclosure.
FIG. 5 is a diagram illustrating a detailed process of DRX timer operation during one-shot feedback according to an embodiment of the disclosure.
FIG. 6 is a diagram illustrating a DRX timer operation process during one-shot feedback according to an embodiment of the disclosure.
FIG. 7 is a diagram illustrating a detailed process of DRX timer operation during one-shot feedback according to an embodiment of the disclosure.
FIG. 8 is a diagram illustrating a PDCCH monitoring operation of a terminal according to an embodiment of the disclosure.
FIG. 9 is a diagram illustrating a detailed process of a DRX timer operation during one-shot feedback according to an embodiment of the disclosure.
FIG. 10 is a diagram illustrating a structure of a base station according to an embodiment of the disclosure.
FIG. 11 is a diagram illustrating a structure of a terminal according to an embodiment of the disclosure.

### [Mode for Disclosure]

Hereinafter, embodiments of the disclosure will be described in detail with reference to the accompanying drawings.

In addition, in describing embodiments of the disclosure, in case that it is determined that a detailed description of a related known function or constitution may unnecessarily obscure the gist of the embodiments, the detailed description will be omitted. Terms described below are terms defined in consideration of functions in the embodiments, and may vary depending on the intention of the user or operator, custom, or the like. Therefore, the definition should be made based on the contents throughout this specification.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. Because these computer program instructions may be embedded in a processor of a general-purpose computer, a special-purpose computer, or other programmable data processing apparatuses, the instructions executed through the processor of the computer or other programmable data processing apparatus generates means for performing the functions described in the flowchart block(s). Because these computer program instructions may also be stored in a computer usable or computer-readable memory that may direct the computer or other programmable data processing apparatus so as to implement functions in a particular manner, the instructions stored in the computer usable or computer-readable memory are also capable of producing an article of manufacture containing instruction modules for performing the functions described in the flowchart block(s). Because the computer program instructions may also be embedded into the computer or other programmable data processing apparatus, the instructions for executing the computer or other programmable data processing apparatuses by generating a computer-implemented process by performing a series of operations on the computer or other programmable data processing apparatuses may provide operations for executing the functions described in the flowchart block(s).

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the corresponding functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "units" may be combined into fewer components and "units" or may be further separated into additional components and "units". Further, the components and "units" may be implemented to operate one or more CPUs in a device or a secure multimedia card.

Hereinafter, a base station is an entity that allocates resources to terminals, and may be at least one of an eNode B (eNB), a Node B, a base station (BS), a radio access network (RAN), an access network (AN), an RAN node, an NR, an NB, a gNB, a wireless access unit, a base station controller, and a node on a network. A terminal may include a user equipment (UE), a mobile station (MS), a cellular phone, a smartphone, a computer, or a multimedia system capable of performing communication functions. In various embodiments of the disclosure, the case where the terminal is a UE will be described as an example.

In addition, various embodiments of the disclosure will be described below using a system based on LTE, LTE-A, or NR as an example, but the various embodiments of the disclosure can also be applied to other communication systems with similar technical background or channel type. Further, an embodiment may be modified in such a range as not to significantly depart from the scope of the disclosure under the determination by one of ordinary skill in the art and such modifications may be applicable to other communication systems.

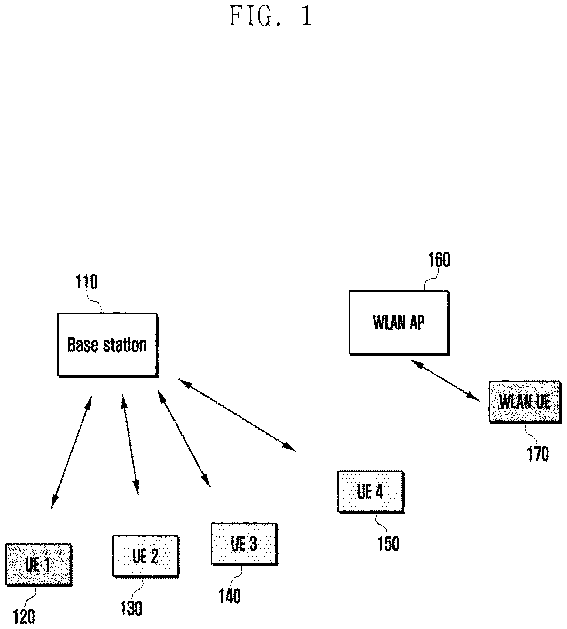

FIG. 1 is a diagram illustrating the operation method of unlicensed band communication according to an embodiment of the disclosure.

An unlicensed band refers to a frequency band where various radio technologies that use radio frequencies coexist, rather than a frequency band exclusively used by a specific service provider. These radio technologies may include various technologies such as mobile communications systems, wireless local area network (WLAN), and wireless sensor network. In order for these various radio technologies to coexist, it is necessary to minimize radio interference and performance degradation caused by the use of one technology to other technologies. To this end, in unlicensed bands, listen before talk (LBT) operation, which identifies whether other technologies are using the band before using radio waves, is essential. If, as a result of LBT, another technology is using this unlicensed band, communication using this unlicensed band is temporarily not possible. This is called LBT Failure. Conversely, as a result of LBT, if no other technology is using this unlicensed band, communication using this unlicensed band can be performed. This is called LBT Success.

FIG. 1 illustrates a scenario where a mobile communication system and a wireless LAN coexist. In a mobile communication system, a base station 110 and terminals 120, 130, 140, and 150 can communicate using wireless communication technology. In wireless LAN, an access point (AP) 160 of the wireless LAN can communicate with a wireless LAN terminal 170 using wireless LAN communication technology. In the unlicensed band, regardless of whether it is a device belonging to the mobile communication system (base station and terminal) or a device belonging to the wireless LAN (wireless LAN AP and wireless LAN terminal), a device performs an LBT operation before transmission using radio waves, identifies whether other technologies use the unlicensed band, and then, can perform a transmission operation only in case of LBT Success.

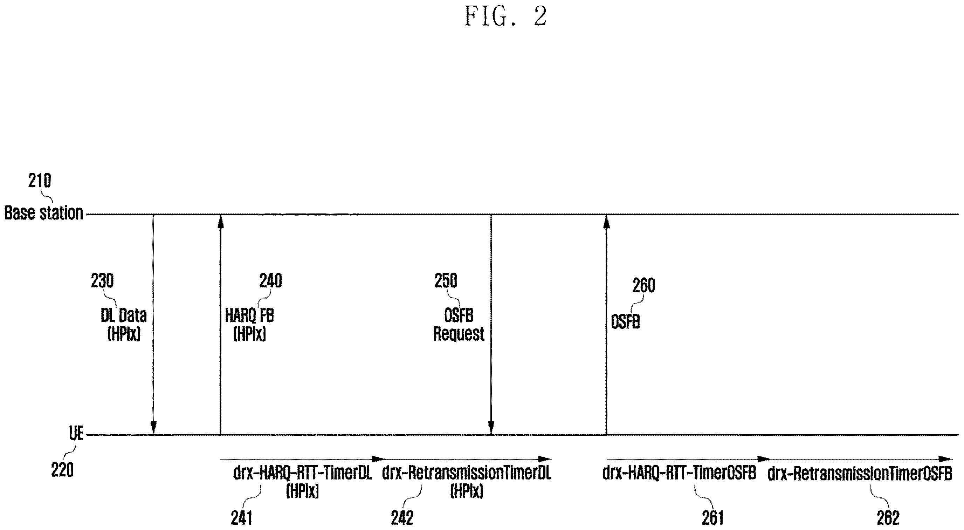

FIG. 2 is a diagram illustrating a discontinuous reception (DRX) timer operation process during one-shot feedback (OSFB) according to an embodiment of the disclosure.

As described above, the LBT operation is essential when communicating in an unlicensed band, and the UE cannot perform transmission in LBT Failure. In addition, in LBT Failure, the base station and the UE may not be able to perform promised and scheduled transmission. In a mobile communication system using an unlicensed band, the uplink hybrid automatic repeat request (HARQ) feedback (FB) 240 for a downlink packet 230 transmitted from the base station 210 to the UE 220 may not be possible due to LBT Failure. In this case, since the base station cannot know whether the UE has successfully received the downlink packet, it may be difficult to determine whether to perform retransmission. In order to retransmit HARQ feedback for the downlink packet that has not been transmitted in this way, the base station may request the UE to transmit HARQ feedback by transmitting a one-shot feedback request message 250. For example, the one-shot feedback request message may be transmitted in the downlink control information (DCI) format of physical downlink control channel (PDCCH). For example, the one-shot feedback request message may include information requesting HARQ feedback for a specific HARQ process, or may include information requesting feedback for the entire HARQ process configured to a cell. The UE that has received the one-shot feedback request message from the base station may transmit one-shot feedback 260 to the base station at a preconfigured time.

In case that DRX is configured to the medium access control (MAC) layer/device of the UE for the purpose of reducing power consumption of the UE, the UE may perform PDCCH monitoring for data reception only at specific times. In case that DRX is configured, the time when the UE performs PDCCH monitoring is called active time. The active time may vary depending on the transmission status of each HARQ process. For example, the time when the UE expects retransmission of a downlink packet (medium access control protocol data unit (MAC PDU)) is the active time, and the UE must perform the PDCCH monitoring during the active time. The expected retransmission time of a downlink packet for a specific HARQ process may be the time when the DRX retransmission timer (e.g., drx-RetransmissionTimerDL) of the HARQ process operates.

In the embodiment in FIG. 2, the base station 210 transmits a downlink data packet (MAC PDU) 230 for HARQ process x (HPIx) to the UE 220, and the UE may transmit HARQ feedback for HPIx to the base station after a time configured (240). Here, x may mean the identifier (ID) of the HARQ process. As an example, this HARQ feedback may be transmitted through physical uplink control channel (PUCCH). The downlink data packet 230 transmitted from the base station to the UE may be known by receiving the DCI format from the PDCCH by the UE, and such PDCCH monitoring may be performed during the UE's active time. When PDCCH monitoring is performed, in case that the PDCCH indicates downlink transmission, the UE may start the HARQ round trip time (RTT) timer (e.g., drx-HARQ-RTT-TimerDL) of the HARQ process corresponding to downlink transmission in the first symbol after transmission including HARQ feedback is completed (241). The HARQ RTT timer is the time from when the base station receives the HARQ feedback to the time when the base station is expected to perform retransmission, and may be configured by the base station to the UE through a radio resource control (RRC) message. In addition, when the PDCCH monitoring is performed, in case that the PDCCH indicates downlink transmission, the UE may stop the DRX retransmission timer (e.g., drx-RetransmissionTimerDL) for the corresponding HARQ process. Thereafter, in case that the HARQ RTT timer expires, the UE may start the DRX retransmission timer (e.g., drx-RetransmissionTimerDL) of the HARQ process (242). In case that the base station fails to receive the HARQ feedback for at least one HARQ process, the base station may transmit a one-shot feedback request message 250 to the UE. When the UE performs PDCCH monitoring, in case that the PDCCH indicates one-shot feedback, the UE may start the HARQ RTT timer (e.g., drx-HARQ-RTT-TimerOSFB) corresponding to the one-shot feedback in the first symbol after transmission including the one-shot feedback is completed (261). Thereafter, in case that the HARQ RTT timer corresponding to the one-shot feedback expires, the UE may start the DRX retransmission timer (e.g., drx-RetransmissionTimerOSFB) corresponding to the one-shot feedback (262). The running time of the DRX retransmission timer corresponding to this one-shot feedback may be considered as the active time of the UE, and the UE may perform the PDCCH monitoring at this time.

The embodiment in FIG. 2 may be characterized by separately configuring the HARQ RTT timer corresponding to one-shot feedback and the DRX retransmission timer corresponding to one-shot feedback. For example, in this case, the HARQ RTT timer corresponding to one-shot feedback and the DRX retransmission timer corresponding to one-shot feedback do not correspond to a specific HARQ process, and they may be configured for each cell, each cell group, and/or each DRX group. For example, the length of the HARQ RTT timer corresponding to one-shot feedback and the length of the DRX retransmission timer corresponding to one-shot feedback may be configured by the RRC message transmitted from the base station to the UE, respectively. In an embodiment, the configuration and length of each timer may be configured through the DRX configuration field.

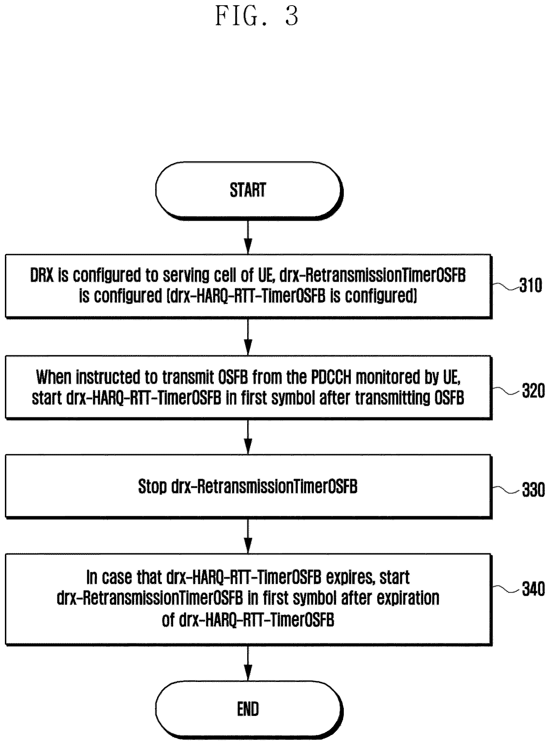

FIG. 3 is a diagram illustrating a detailed process of DRX timer operation during one-shot feedback according to an embodiment of the disclosure.

In the embodiment in FIG. 3, it is assumed that DRX is configured to the serving cell of the UE, and a HARQ RTT timer (e.g., drx-HARQ-RTT-TimerOSFB) corresponding to one-shot feedback and a DRX retransmission timer (e.g., drx-RetransmissionTimerOSFB) corresponding to one-shot feedback are configured separately from the timer configured for each HARQ process (310). The UE may identify the DRX configuration, the configuration of the HARQ RTT timer (e.g., drx-HARQ-RTT-TimerOSFB) corresponding to one-shot feedback, and the configuration of the DRX retransmission timer (e.g., drx-RetransmissionTimerOSFB) corresponding to one-shot feedback. In an embodiment, the HARQ RTT timer corresponding to one-shot feedback and the DRX retransmission timer corresponding to one-shot feedback may need to be configured together, and in this case, configuration of one timer may mean that another timer is also configured. For example, if the DRX retransmission timer corresponding to one-shot feedback is configured in operation 310, this may mean that the HARQ RTT timer corresponding to one-shot feedback is also configured.

The UE may monitor the PDCCH in active time, and when instructed to transmit one-shot feedback from the PDCCH monitored by the UE, the UE may transmit one-shot feedback to the base station. The UE may start a HARQ RTT timer (e.g., drx-HARQ-RTT-TimerOSFB) corresponding to the one-shot feedback in the first symbol after transmitting the one-shot feedback (320).

In this case, if the DRX retransmission timer (e.g., drx-RetransmissionTimerOSFB) corresponding to the one-shot feedback is running, the UE may stop the DRX retransmission timer corresponding to the one-shot feedback (330).

In case that the HARQ RTT timer corresponding to the one-shot feedback expires, the UE may start a DRX retransmission timer (e.g., drx-RetransmissionTimerOSFB) corresponding to the one-shot feedback in the first symbol after expiration of the HARQ RTT timer (340). The running time of the DRX retransmission timer corresponding to one-shot feedback is considered as the active time of the UE, and the UE may perform PDCCH monitoring at this time.

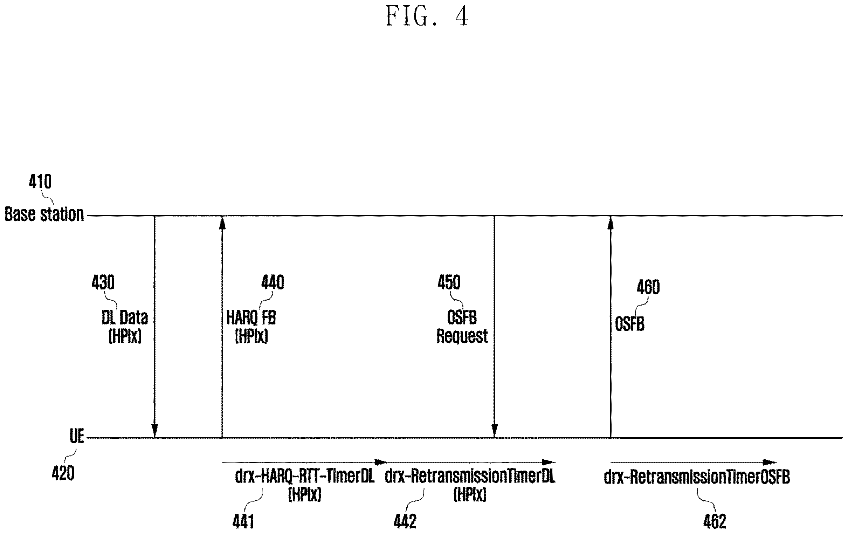

FIG. 4 is a diagram illustrating a DRX timer operation process during one-shot feedback according to an embodiment of the disclosure.

LBT operation may be essential when communicating in an unlicensed band, and in LBT Failure, the UE may not perform transmission. In addition, in LBT Failure, the base station and the UE may not be able to perform the promised and scheduled transmission. In a mobile communication system using an unlicensed band, the uplink HARQ feedback 440 for the downlink packet 430 transmitted from the base station 410 to the UE 420 may not be transmitted due to LBT Failure. In this case, since the base station may not know whether the UE has successfully received the downlink packet, it may be difficult for the base station to determine whether to perform retransmission. In order to retransmit HARQ feedback for the downlink packet that has not been transmitted in this way, the base station may request the UE to transmit HARQ feedback by transmitting a one-shot feedback request message 450. For example, the one-shot feedback request message may be transmitted in the DCI format of PDCCH. For example, the one-shot feedback request message may include information requesting HARQ feedback for a specific HARQ process. Alternatively, the one-shot feedback request message may include information requesting feedback for the entire HARQ process configured to the cell. The UE that has received the one-shot feedback request message from the base station may transmit one-shot feedback 460 to the base station at a preconfigured time.

In case that DRX is configured to the MAC device/layer of the UE for the purpose of reducing power consumption of the UE, the UE may perform PDCCH monitoring for data reception only at specific times. In case that DRX is configured, the time when the UE performs PDCCH monitoring is called active time. The active time may vary depending on the transmission status of each HARQ process. For example, the time when the UE expects retransmission of a downlink packet (MAC PDU) is the active time, and the UE must perform PDCCH monitoring during the active time. The expected retransmission time of a downlink packet for a specific HARQ process may be the time when the DRX retransmission timer (e.g., drx-RetransmissionTimerDL) of the HARQ process operates.

In the embodiment in FIG. 4, the base station 410 transmits a downlink data packet (MAC PDU) 430 for HARQ process x (HPIx) to the UE 420, and the UE may transmit HARQ feedback for HPIx to the base station after a time configured (440). Here, x may mean the identifier (ID) of the HARQ process. As an example, this HARQ feedback may be transmitted through PUCCH. The downlink data packet 430 transmitted from the base station to the UE may be known by receiving the DCI format from the PDCCH by the UE, and such PDCCH monitoring may be performed during the UE's active time. When PDCCH monitoring is performed, in case that the PDCCH indicates downlink transmission, the UE may start the HARQ RTT timer (e.g., drx-HARQ-RTT-TimerDL) of the HARQ process corresponding to downlink transmission in the first symbol after transmission including HARQ feedback is completed (441). The HARQ RTT timer is the time from when the base station receives HARQ feedback to the time when the base station is expected to perform retransmission, and may be configured by the base station to the UE through an RRC message. Also, when PDCCH monitoring is performed, in case that the PDCCH indicates downlink transmission, the UE may stop the DRX retransmission timer (e.g., drx-RetransmissionTimerDL) for the corresponding HARQ process. Thereafter, in case that the HARQ RTT timer expires, the UE may start the DRX retransmission timer (e.g., drx-RetransmissionTimerDL) of the HARQ process (442). In case that the base station fails to receive HARQ feedback for at least one HARQ process, the base station may transmit a one-shot feedback request message 450 to the UE. When the UE performs PDCCH monitoring, in case that the PDCCH indicates one-shot feedback, the UE may start a DRX retransmission timer (e.g., drx-RetransmissionTimerOSFB) corresponding to the one-shot feedback in the first symbol after transmission including the one-shot feedback is completed (462). The running time of the DRX retransmission timer corresponding to this one-shot feedback may be considered as the active time of the UE, and the UE may perform PDCCH monitoring at this time.

The embodiment in FIG. 4 may be characterized by separately configuring a DRX retransmission timer corresponding to one-shot feedback. For example, in this case, the DRX retransmission timer corresponding to one-shot feedback does not correspond to a specific HARQ process, and may be configured for each cell, each cell group, and/or each DRX group. For example, the length of this timer may be configured by an RRC message transmitted from the base station to the UE. In an embodiment, the configuration and length of the timer may be configured through the DRX configuration field.

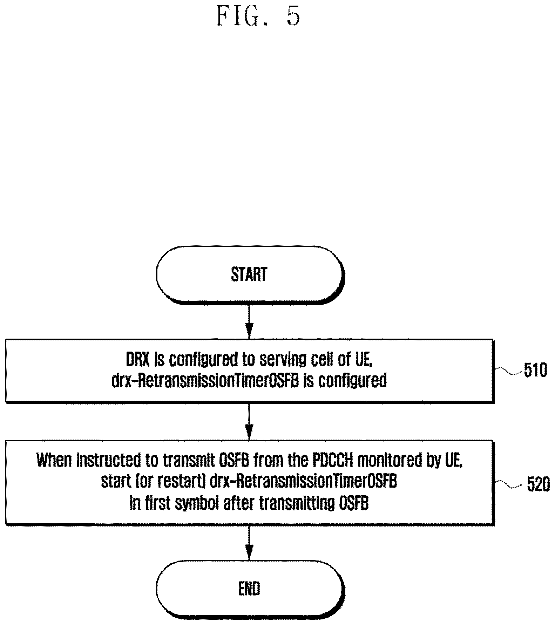

FIG. 5 is a diagram illustrating a detailed process of DRX timer operation during one-shot feedback according to an embodiment of the disclosure.

In the embodiment in FIG. 5, it is assumed that DRX is configured to the serving cell of the UE and the DRX retransmission timer (e.g., drx-RetransmissionTimerOSFB) corresponding to one-shot feedback is configured separately from the timer configured for each HARQ process (510). The UE may identify the DRX configuration and the configuration of the DRX retransmission timer (e.g., drx-RetransmissionTimerOSFB) corresponding to one-shot feedback.

The UE may monitor the PDCCH in active time, and when instructed to transmit one-shot feedback from the PDCCH monitored by the UE, the UE may transmit one-shot feedback to the base station. The UE may start the DRX retransmission timer corresponding to the one-shot feedback in the first symbol after transmitting the one-shot feedback (520). If the DRX retransmission timer corresponding to one-shot feedback was running, this timer may be restarted. The running time of the DRX retransmission timer corresponding to one-shot feedback is considered as the active time of the UE, and the UE may perform PDCCH monitoring at this time.

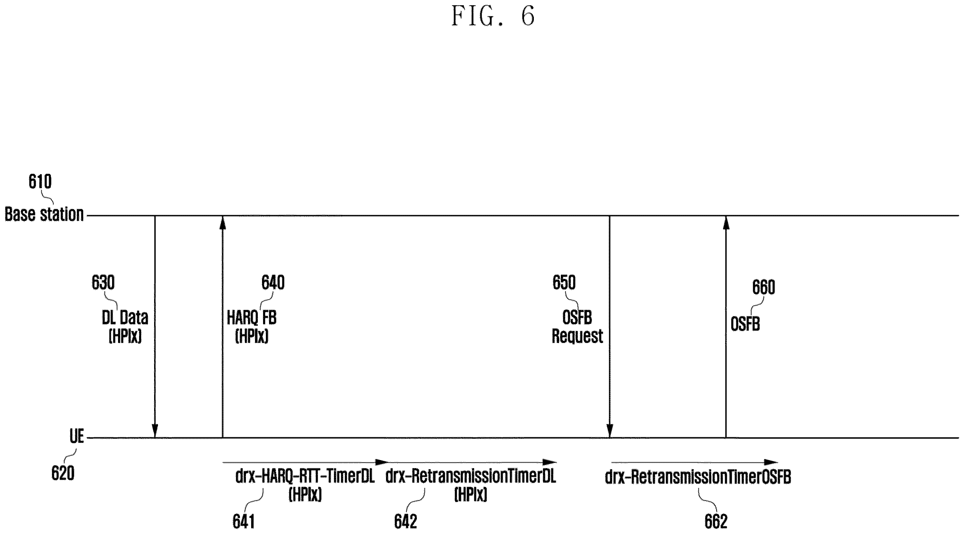

FIG. 6 is a diagram illustrating a DRX timer operation process during one-shot feedback according to an embodiment of the disclosure.

LBT operation is essential when communicating in an unlicensed band, and the UE may not perform transmission in LBT Failure. In addition, in LBT Failure, the base station and the UE may not be able to perform the promised and scheduled transmission. In a mobile communication system using an unlicensed band, uplink HARQ feedback 640 for the downlink packet 630 transmitted from the base station 610 to the UE 620 may not be transmitted due to LBT Failure. In this case, since the base station may not know whether the UE has successfully received the downlink packet, it may be difficult for the base station to determine whether to perform retransmission. In order to retransmit HARQ feedback for the downlink packet that has not been transmitted in this way, the base station may request the UE to transmit HARQ feedback by transmitting a one-shot feedback request message 650. For example, the one-shot feedback request message may be transmitted in the DCI format of PDCCH. For example, the one-shot feedback request message may include information requesting HARQ feedback for a specific HARQ process. Alternatively, the one-shot feedback request message may include information requesting feedback for the entire HARQ process configured to the cell. The UE that has received the one-shot feedback request message from the base station may transmit one-shot feedback 660 to the base station at a preconfigured time.

In case that DRX is configured to the MAC device/layer of the UE for the purpose of reducing power consumption of the UE, the UE may perform PDCCH monitoring for data reception only at specific times. In case that DRX is configured in this way, the time when the UE performs PDCCH monitoring is called active time. The active time may vary depending on the transmission status of each HARQ process. For example, the time when the UE expects retransmission of a downlink packet (MAC PDU) is the active time, and the UE must perform PDCCH monitoring during the active time. The time when retransmission of a downlink packet is expected for a specific HARQ process may be the start of operation of the DRX retransmission timer (e.g., drx-RetransmissionTimerDL) of the HARQ process.

In the embodiment in FIG. 6, the base station 610 transmits a downlink data packet (MAC PDU) 630 for HARQ process x (HPIx) to the UE 620, and the UE may transmit HARQ feedback for HPIx to the base station after a time configured (640). Here, x may mean the identifier (ID) of the HARQ process. This HARQ feedback may be transmitted through PUCCH. The downlink data packet 630 transmitted from the base station to the UE may be known by receiving the DCI format from the PDCCH by the UE, and such PDCCH monitoring may be performed during the UE's active time. When PDCCH monitoring is performed, in case that the PDCCH indicates downlink transmission, the UE may start the HARQ RTT timer (e.g., drx-HARQ-RTT-TimerDL) of the HARQ process corresponding to downlink transmission in the first symbol after transmission including HARQ feedback is completed (641). The HARQ RTT timer is the time from when the base station receives HARQ feedback to the time when the base station is expected to perform retransmission, and may be configured by the base station to the UE through an RRC message. Also, when PDCCH monitoring is performed, in case that the PDCCH indicates downlink transmission, the UE may stop the DRX retransmission timer (e.g., drx-RetransmissionTimerDL) for the corresponding HARQ process. Thereafter, in case that the HARQ RTT timer expires, the DRX retransmission timer (e.g., drx-RetransmissionTimerDL) of the HARQ process may be started (642).

In case that the base station fails to receive HARQ feedback for at least one HARQ process, the base station may transmit a one-shot feedback request message 650 to the UE. When the UE performs PDCCH monitoring, in case that the PDCCH indicates one-shot feedback, the UE may start the DRX retransmission timer (e.g., drx-RetransmissionTimerOSFB) corresponding to the one-shot feedback in the first symbol after receiving (650) the one-shot feedback request message (662). The running time of the DRX retransmission timer corresponding to this one-shot feedback is considered as the active time of the UE, and the UE may perform PDCCH monitoring at this time. Thereafter, the UE may transmit a one-shot feedback message to the base station (660).

The embodiment in FIG. 6 may be characterized by separately configuring a DRX retransmission timer corresponding to one-shot feedback. For example, in this case, the DRX retransmission timer corresponding to one-shot feedback does not correspond to a specific HARQ process, and may be configured for each cell, each cell group, and/or each DRX group. For example, the length of this timer may be configured through an RRC message transmitted from the base station to the UE. In an embodiment, the configuration and length of this timer may be configured through the DRX configuration field.

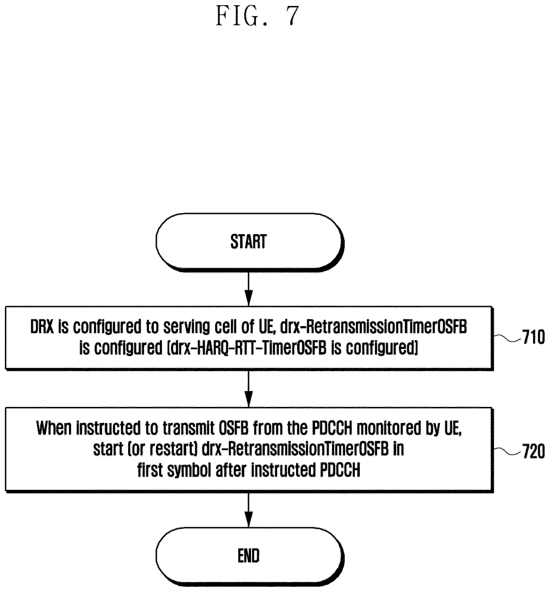

FIG. 7 is a diagram illustrating a detailed process of DRX timer operation during one-shot feedback according to an embodiment of the disclosure.

In the embodiment in FIG. 7, it is assumed that DRX is configured to the serving cell of the UE and the DRX retransmission timer (e.g., drx-RetransmissionTimerOSFB) corresponding to one-shot feedback is configured separately from the timer configured for each HARQ process (710). The UE may identify the DRX configuration and the configuration of the DRX retransmission timer (e.g., drx-RetransmissionTimerOSFB) corresponding to one-shot feedback. Thereafter, the UE may monitor the PDCCH in active time, and when the UE is instructed to transmit one-shot feedback from the monitored PDCCH, the UE may start the DRX retransmission timer corresponding to the one-shot feedback in the first symbol after receiving the instructed PDCCH (720). If the DRX retransmission timer corresponding to one-shot feedback has been running, this timer may be restarted. The running time of the DRX retransmission timer corresponding to one-shot feedback is considered as the active time of the UE, and the UE may perform PDCCH monitoring at this time.

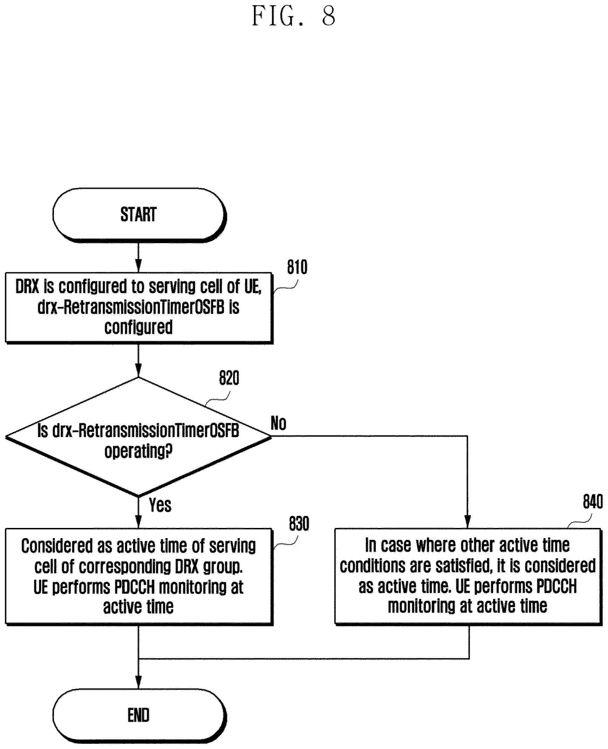

FIG. 8 is a diagram illustrating a PDCCH monitoring operation of a terminal according to an embodiment of the disclosure.

In case that DRX is configured to the MAC device/layer of the UE for the purpose of reducing power consumption of the UE, the UE may perform PDCCH monitoring for data reception only at specific times. In case that DRX is configured, the time when the UE performs PDCCH monitoring is called active time. The active time may vary depending on the transmission status of each HARQ process. For example, the time when the UE expects retransmission of a downlink packet (MAC PDU) is the active time, and the UE must perform PDCCH monitoring during the active time.

In the embodiment in FIG. 8, it is assumed that a DRX retransmission timer (e.g., drx-RetransmissionTimerOSFB) corresponding to one-shot feedback is configured to the UE. However, this assumption does not limit the technical scope of the disclosure. According to an embodiment of the disclosure (e.g., the embodiments in FIGS. 2 and 3), a DRX retransmission timer corresponding to one-shot feedback may be configured simultaneously with a HARQ retransmission timer (e.g., drx-HARQ-RTT-TimerOSFB) corresponding to one-shot feedback. Therefore, in this case, the configuration of the HARQ retransmission timer corresponding to one-shot feedback and the configuration of the DRX retransmission timer corresponding to one-shot feedback may have the same meaning as the configuration of the DRX retransmission timer corresponding to one-shot feedback in FIG. 8. In an embodiment, the base station may configure the UE to use one-shot feedback through an RRC message.

The UE may identify whether the DRX retransmission timer corresponding to one-shot feedback is running (820).

If the DRX retransmission timer corresponding to one-shot feedback is running (820), the MAC layer/device of the UE may consider this time (i.e., the time while the DRX retransmission timer corresponding to one-shot feedback is running) as the active time of the serving cell of the corresponding DRX group. The UE may monitor the PDCCH during the active time to identify whether there is transmission or reception related to the corresponding UE (830). If the DRX retransmission timer corresponding to one-shot feedback is not running in operation 820, the UE identifies whether other active time conditions are satisfied, and in case that other active time conditions are satisfied, the UE may consider this time as the active time of the serving cell of the corresponding DRX group (840). If the active time conditions are not satisfied at all, the UE may not perform PDCCH monitoring.

Based on the embodiment in FIG. 8, in case that DRX is configured to the MAC layer/device of the UE, the active time condition of the serving cell of the corresponding DRX group may have the following conditions.
- a case where drx-onDurationTimer or drx-InactivityTimer is configured and operating,
- a case where drx-RetransmissionTimerDL or drx-RetransmissionTimerUL operates in at least one serving cell of this DRX group,
- a case where drx-RetransmissionTimerOSFB operates (e.g., a case where drx-RetransmissionTimerOSFB is configured on a cell basis, a case where this timer operates in at least one serving cell of the DRX group),
- a case where the ra-ContentionResolutionTimer or msgB-ResponseWindow timer required for random access operation operates,
- a case where a scheduling request message has been transmitted on PUCCH and is currently in a pending state, or
- a case where after receiving a random access response message for a random access preamble that has not been selected by the MAC device among the contention-based random access preambles, the new transmission of PDCCH allocated to the C-RNTI is not received.

In case that at least one of the above conditions is satisfied, the UE may perform PDCCH monitoring by considering the time as the active time.

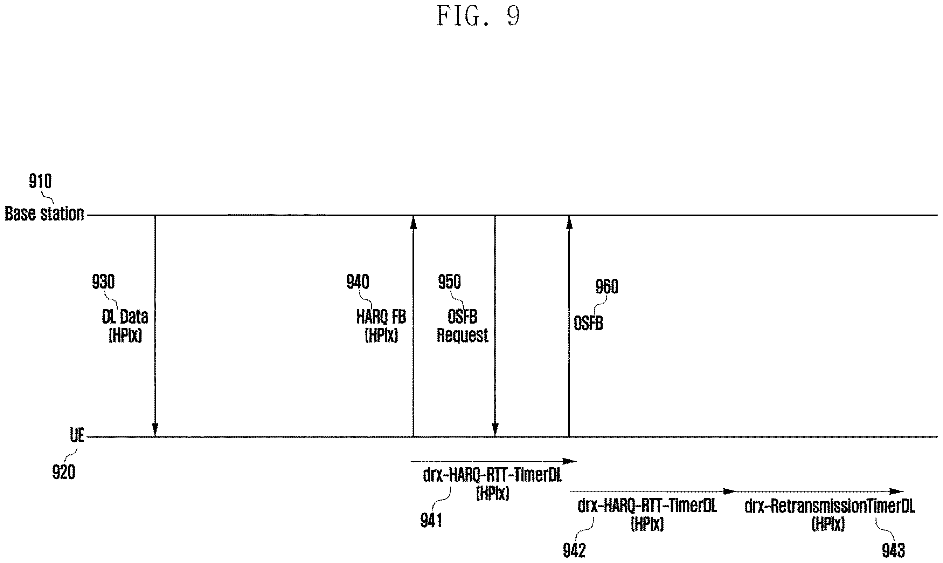

FIG. 9 is a diagram illustrating a detailed process of a DRX timer operation during one-shot feedback according to an embodiment of the disclosure.

LBT operation is essential when communicating in an unlicensed band, and the UE cannot perform transmission in LBT Failure. In addition, in LBT Failure, the base station and the UE may not be able to perform the promised and scheduled transmission. In a mobile communication system using an unlicensed band, uplink HARQ feedback 940 for the downlink packet 930 transmitted from the base station 910 to the UE 920 may not be transmitted due to LBT Failure. In this case, since the base station may not know whether the UE has successfully received the downlink packet, it may be difficult for the base station to determine whether to perform retransmission. In order to retransmit HARQ feedback for the downlink packet that has not been transmitted in this way, the base station may request the UE to transmit HARQ feedback by transmitting a one-shot feedback request message 950. For example, the one-shot feedback request message may be transmitted in the DCI format of PDCCH. For example, the one-shot feedback request message may include information requesting HARQ feedback for a specific HARQ process, or may include information requesting feedback for the entire HARQ process configured to the cell. The UE that has received the one-shot feedback request message from the base station may transmit one-shot feedback 960 to the base station at a preconfigured time.

In case that DRX is configured to the MAC device/layer of the UE for the purpose of reducing power consumption of the UE, the UE may perform PDCCH monitoring for data reception only at specific times. In case that DRX is configured, the time when the UE performs PDCCH monitoring is called active time. The active time may vary depending on the transmission status of each HARQ process. For example, the time when the UE expects retransmission of a downlink packet (MAC PDU) is the active time, and the UE must perform PDCCH monitoring during the active time. The time when retransmission of a downlink packet is expected for a specific HARQ process may be the start of operation of the DRX retransmission timer (e.g., drx-RetransmissionTimerDL) of the HARQ process.

In the embodiment in FIG. 9, the base station 910 transmits a downlink data packet (MAC PDU) 930 for HARQ process x (HPIx) to the UE 920, and the UE may transmit HARQ feedback for HPIx to the base station after a time configured (940). Here, x may mean the identifier (ID) of the HARQ process. As an example, this HARQ feedback may be transmitted through PUCCH. The downlink data packet 930 transmitted from the base station to the UE may be known by receiving the DCI format from the PDCCH by the UE, and such PDCCH monitoring may be performed during the UE's active time. When PDCCH monitoring is performed, in case that the PDCCH indicates downlink transmission, the UE may start the HARQ RTT timer (e.g., drx-HARQ-RTT-TimerDL) of the HARQ process corresponding to downlink transmission in the first symbol after transmission including HARQ feedback is completed (941). The HARQ RTT timer is the time from when the base station receives HARQ feedback to the time when the base station is expected to perform retransmission, and may be configured by the base station to the UE through an RRC message. Also, when PDCCH monitoring is performed, in case that the PDCCH indicates downlink transmission, the UE may stop the DRX retransmission timer (e.g., drx-RetransmissionTimerDL) for the corresponding HARQ process.

In case that the base station fails to receive HARQ feedback for at least one HARQ process, the base station may transmit a one-shot feedback request message 950 to the UE. The UE that has received the one-shot feedback request message may transmit one-shot feedback to the base station and inform the base station of the UE's transmission status (960). For example, when the base station requests one-shot feedback from the UE in operation 950, it may request one-shot feedback for a specific HARQ process, or may request one-shot feedback for all HARQ processes. In case that the UE is requested for one-shot feedback for HARQ process x or one-shot feedback for all HARQ processes, the UE may start the HARQ RTT timer for HARQ process x. The start point of the HARQ RTT timer may be the first symbol after transmission including one-shot feedback is completed. In the embodiment in FIG. 9, since the HARQ RTT timer has been running at the time of starting the HARQ RTT timer for HARQ process x, the MAC layer/device of the UE may restart the HARQ RTT timer of HARQ process x (942) . Thereafter, in case that the HARQ RTT timer expires, the UE may start the DRX retransmission timer (e.g., drx-RetransmissionTimerDL) of the HARQ process (943).

In the embodiment in FIG. 9, the HARQ RTT timer corresponding to one-shot feedback and the DRX retransmission timer corresponding to one-shot feedback are not separately configured, but the timer configured for each HARQ process may be started or restarted when the one-shot feedback is triggered.

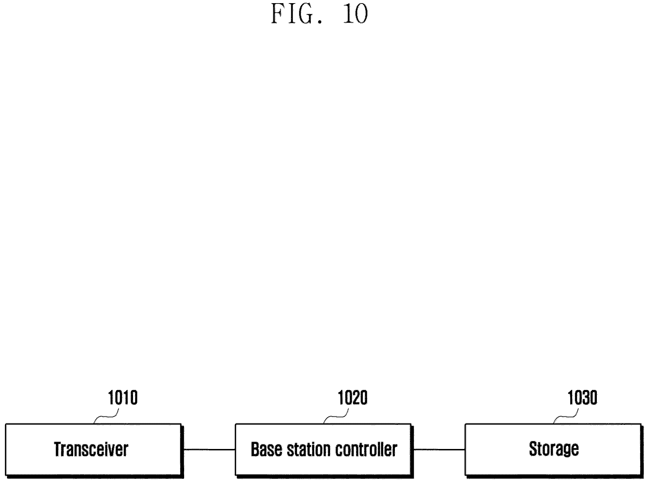

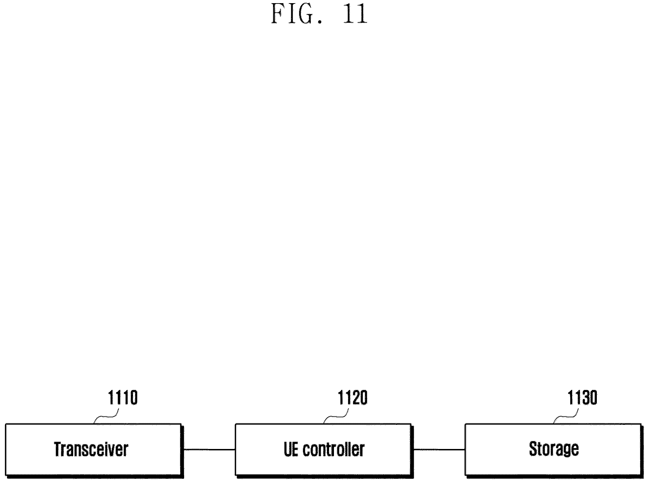

The above-described proposed method and/or embodiment may be performed by the base station in FIG. 10 and the UE in FIG. 11.

FIG. 10 is a diagram illustrating the structure of the base station according to embodiments of the disclosure.

With reference to FIG. 10, the base station may include a transceiver 1010, a controller 1020, and a storage 1030. In the disclosure, the controller 1020 may be defined as a circuit, an application-specific integrated circuit, or at least one processor. The transceiver 1010 may transmit/receive signals to/from other network entities or LTE. For example, the transceiver 1010 may transmit system information, a synchronization signal, or a reference signal to the UE. The controller 1020 may control overall operations of the base station according to the embodiments proposed by the disclosure. For example, the controller 1020 may control signal flows among the respective blocks to perform the operations described with reference to the flowcharts. The storage 1030 may store at least one of information transmitted/received by the transceiver 1010 and information generated by the controller 1020.

FIG. 11 is a diagram illustrating the structure of the UE according to embodiments of the disclosure.

With reference to FIG. 11, the UE may include a transceiver 1110, a controller 1120, and a storage 1130. In the disclosure, the controller 1120 may be defined as a circuit, an application-specific integrated circuit, or at least one processor. The transceiver 1110 may transmit/receive signals to/from other network entities or base station. For example, the transceiver 1110 may receive system information, a synchronization signal, or a reference signal from the base station. The controller 1120 may control overall operations of the UE according to the embodiment proposed by the disclosure. For example, the controller 1120 may control signal flows among the respective blocks to perform the operations described with reference to the flowcharts. The storage 1130 may store at least one of information transmitted/received by the transceiver 1110 and information generated by the controller 1120.

Meanwhile, in the detailed description of the disclosure, specific embodiments have been described, but it is apparent that various modifications are possible without departing from the scope of the disclosure. Therefore, the scope of the disclosure should not be limited to the described embodiments, but should be determined not only by the scope of the claims described later, but also by the scope of the claims and their equivalents.

## Claims

1. A method performed by a terminal in a wireless communication system, the method comprising:
identifying that discontinuous reception (DRX) has been configured;
receiving a physical downlink control channel (PDCCH) at an active time of the DRX, the PDCCH including information for requesting one-shot hybrid automatic repeat request (HARQ) feedback;
performing a HARQ feedback corresponding to an identifier (ID) of a first HARQ process among all HARQ processes based on a request for the one-shot HARQ feedback; and
starting a DRX HARQ round trip time (RTT) timer associated with the first HARQ process.

2. The method of claim 1, further comprising performing a HARQ feedback for the all HARQ processes including the first HARQ process,
wherein the starting the DRX HARQ RTT comprises restarting the DRX HARQ RTT timer.

3. The method of claim 1, wherein the DRX HARQ RTT timer starts at a first symbol after transmission of the HARQ feedback corresponding to the ID of the first HARQ process is completed.

4. The method of claim 1, further comprising starting a DRX retransmission timer associated with the first HARQ process in case that the DRX HARQ RTT timer expires.

5. A method performed by a base station in a wireless communication system, the method comprising:
transmitting information for configuring discontinuous reception (DRX) to a terminal;
transmitting a physical downlink control channel (PDCCH) to the terminal at an active time of the DRX, the PDCCH including information for requesting one-shot hybrid automatic repeat request (HARQ) feedback; and
receiving, from the terminal, a HARQ feedback corresponding to an identifier (ID) of a first HARQ process among all HARQ processes based on a request for the one-shot HARQ feedback,
wherein a DRX HARQ round trip time (RTT) timer associated with the first HARQ process starts.

6. The method of claim 5, wherein the DRX HARQ RTT timer starts at a first symbol after transmission of the HARQ feedback corresponding to the ID of the first HARQ process is completed.

7. The method of claim 5, further comprising receiving, from the terminal, a HARQ feedback for the all HARQ processes including the first HARQ process,
wherein the DRX HARQ RTT timer restarts.

8. The method of claim 5, wherein a DRX retransmission timer associated with the first HARQ process starts in case that the DRX HARQ RTT timer expires.

9. A terminal in a wireless communication system, comprising:
a transceiver; and
a controller functionally connected to the transceiver,
wherein the controller is configured to:
identify that discontinuous reception (DRX) has been configured;
receive a physical downlink control channel (PDCCH) at an active time of the DRX, the PDCCH including information for requesting one-shot hybrid automatic repeat request (HARQ) feedback;
perform a HARQ feedback corresponding to an identifier (ID) of a first HARQ process among all HARQ processes based on a request for the one-shot HARQ feedback; and
start a DRX HARQ round trip time (RTT) timer associated with the first HARQ process.

10. The terminal of claim 9, wherein the controller is further configured to:
perform a HARQ feedback for the all HARQ processes including the first HARQ process; and
restart the DRX HARQ RTT timer.

11. The terminal of claim 9, wherein the DRX HARQ RTT timer starts at a first symbol after transmission of the HARQ feedback corresponding to the ID of the first HARQ process is completed.

12. The terminal of claim 9, wherein the controller is further configured to start a DRX retransmission timer associated with the first HARQ process in case that the DRX HARQ RTT timer expires.

13. Abase station in a wireless communication system, comprising:
a transceiver; and
a controller functionally connected to the transceiver,
wherein the controller is configured to:
transmit information for configuring discontinuous reception (DRX) to a terminal;
transmit a physical downlink control channel (PDCCH) to the terminal at an active time of the DRX, the PDCCH including information for requesting one-shot hybrid automatic repeat request (HARQ) feedback; and
receive, from the terminal, a HARQ feedback corresponding to an identifier (ID) of a first HARQ process among all HARQ processes on the basis of a request for the one-shot HARQ feedback,
wherein a DRX HARQ round trip time (RTT) timer associated with the first HARQ process starts.

14. The base station of claim 13, wherein the DRX HARQ RTT timer starts at a first symbol after transmission of the HARQ feedback corresponding to the ID of the first HARQ process is completed, and
wherein a DRX retransmission timer associated with the first HARQ process starts in case that the DRX HARQ RTT timer expires.

15. The base station of claim 13, wherein the controller is further configured to:
receive, from the terminal, a HARQ feedback for the all HARQ processes including the first HARQ process; and
restart the DRX HARQ RTT timer.
